# EUROPEAN PATENT APPLICATION

(11) **EP 0 766 439 A2**
(43) Date of publication of application: **02.04.1997**
(21) Application number: 96307064.4
(22) Date of filing: 27.09.1996
(51) Int. Cl.: H04M 1/72

(54) **Apparatus informing message received for portable wireless telephone**

(30) Priority: 27.09.1995 JP 249963/95
(71) Applicant: SEIKO INSTRUMENTS INC., Chiba-shi, Chiba 261 (JP)
(72) Inventor: Noguchi, Masahiro, Mihama-Ku, Chiba-shi, Chiba 261 (JP); Koyama, Kazuhiro, Mihama-Ku, Chiba-shi, Chiba 261 (JP); Horiguchi, Katsuhiro, Mihama-Ku, Chiba-shi, Chiba 261 (JP)
(74) Representative: Sturt, Clifford Mark

(57) **Abstract**

A control circuit 24 intakes a digital signal from a wave-shaping circuit 23 and outputs a control signal to a counter circuit. The control circuit 24 intakes the result of count in the counting circuit 27 and outputs time data like one frame length and one slot length of a signal as communication system data when the signal intaken has "Hi" level signal length and "Lo" level signal length which have determined period. A memory circuit 30 memorises time data like one frame length and one slot length of a transmitting signal which is communication system data of up circuit from a moving station to a base station. A selecting circuit 29 selects and outputs a communication system from among the communication system data memorised in the memory means 30. A comparison circuit 28 compares time data like on frame length and one slot length of receiving signal from the control circuit 24 with the communication data selected from the memory circuit 30 by the selecting circuit 29 and outputs the result.

## Description

The present invention relates to an apparatus informing message received for portable wireless telephone informing state of message received of a portable wireless telephone.

Spread of portable wireless telephones like portable telephones and personal handy phone system has brought with it uses of various places. Portable wireless telephones are becoming small-sized, light and long-lived as the trend of products. Few portable wireless telephones with vibration information function are sold now because the portable wireless telephones are heavy and large-sized. In use of portable wireless telephones, many portable wireless telephones are used with a silent mode(silent state) in the circumstance like trains, meeting rooms, parlors, movie theaters and halls in which calling bells of telephones should not be rung.

On the other side, there are so noisy places where the bell of telephone can not be heard. Portable wireless telephone with function of information by vibration are often carried being packed in the bags as it is troublesome to carry the telephone even though they are small-sized and light. In that circumstances, it often happens to miss the telephone call of important contents.

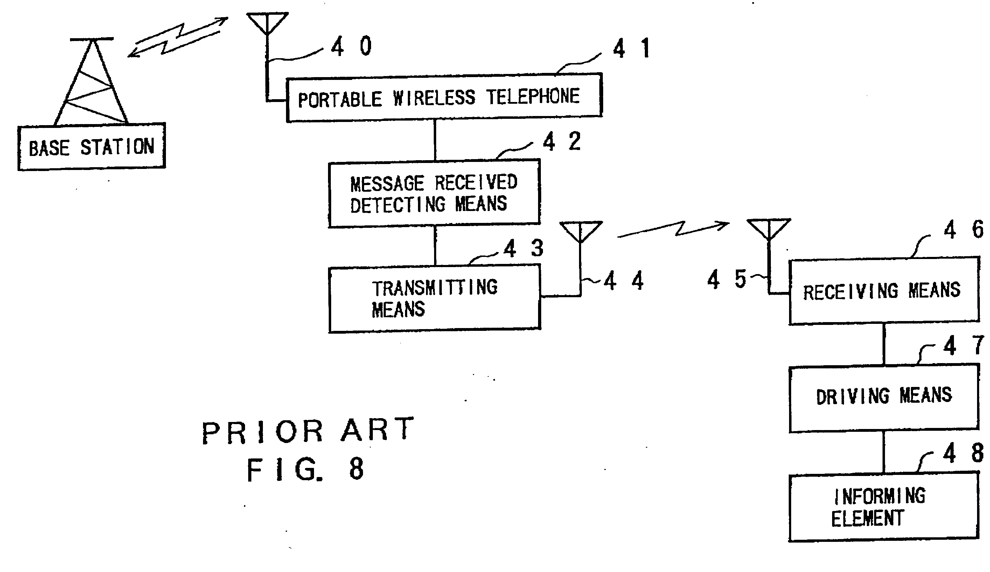

A first example of prior apparatus informing message received for portable wireless telephone is introduced, for example, in Official Opened Patent S63-226156, H1-305752, H6-23340, and Official Opened Utility S62-42353, H6-21875. Fig. 8 is a function block diagram of prior apparatus informing message received in the first example. A main body of telephone 41 specially has message received detecting means 42 detecting message received and transmitting means 43 outputting detecting signal through antenna 44 as an electric wave. An apparatus informing message received which is separated from the telephone has receiving means receiving the detecting signal from antenna 45, driving means 47 outputting signal driving informing element 48, and the informing means 48 informing message received by the driving signal. As above-mentioned, the prior apparatus informing message received for portable wireless telephone has consisted of a portable wireless telephone and an apparatus informing message received as a pair.

A second example of prior apparatus informing message received for portable wireless telephone is described as follows.

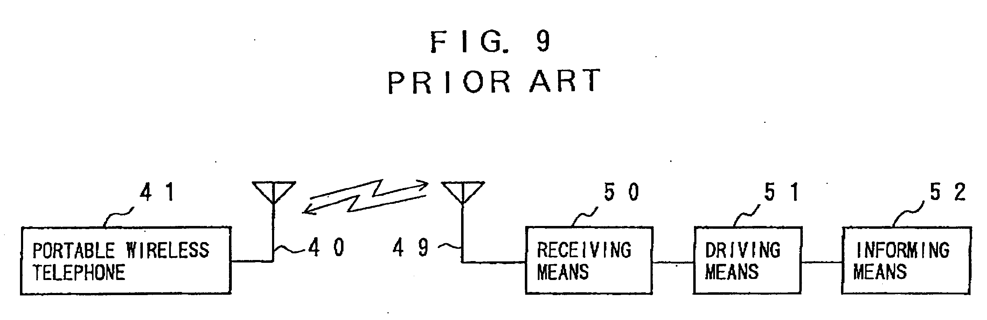

Fig. 9 is a function block diagram of prior apparatus informing message received in the second example. An apparatus informing message received has sold recently, which has receiving means 50 receiving, from antenna 49, transmitting signal that a portable wireless telephone 41 outputs from antenna 40, driving means 51 outputting signal driving informing element 52, and the informing element 52 informing message received by the driving signal. The apparatus receives transmitting signal of electric wave which the portable wireless telephone 41 outputs from the antenna 40 informs independently of communication system of transmitting signal in the portable wireless telephone 41 when the transmitting signal of the portable wireless telephone 41 is output.

In the construction of prior first example above-mentioned, the portable wireless telephone 41 needs to have specially a transmitting portion comprised of message received detecting means 42, transmitting means 43 and antenna 44 detecting message received and outputting detecting signal of an electric wave. As users have to pay much for preparing a set of the portable wireless telephone 41 and apparatus informing message received and the construction of the apparatus is complex, the prior apparatus has demerits.

In the construction of prior second example, the apparatus informing message received easily responds to transmitting signal by the electric wave of portable wireless telephone with another communication system, noise, and an electric wave which other transmitters near to the apparatus informing message received in transmitting frequency band generates except transmitting signal by the electric wave which the portable wireless telephone 41 used by an user outputs and informs.

To solve the above-mentioned problems, the present invention comprises receiving means receiving reply signal which a portable wireless telephone outputs to a base station responding a call from the base station to the portable wireless telephone, decoder means intaking output signal from receiving means, clocking time of one frame length and one slot length of transmitting signal through an uplink from a moving station to the base station, and outputting as communication system data, memory means memorizing time data like one frame length and one slot length of transmitting signal through the uplink from the moving station to the base station as communication system data, selecting means selecting one or plural of communication system data among determined communication system data memorized in said memory means, comparison means intaking the output signal from decoder means, comparing the time data like one frame length and one slot length of transmitting signal of the uplink with the time data like one frame length and one slot length of transmitting signal memorized in memory means as the communication system data, and outputting the compared result to a driving means, the driving means intaking the compared result from said comparison means and outputting a driving signal, and informing means intaking the driving signal from said driving means and informing.

Embodiments of the present invention will now be described with reference to the accompanying drawings, of which:
Fig. 1 is a function block diagram of an apparatus informing message received of the present invention;
Fig. 2 is a function block diagram of an apparatus informing message received having a selecting means of the present invention;
Fig. 3 is a function block diagram to display time in the present invention;
Fig. 4 is a block diagram showing a detail construction of embodiment of the present invention;
Fig. 5 is a view explaining TDMA system (3-multiplex system) of communication system of the digital portable wireless in the present invention;
Fig. 6 is a view explaining TDMA system (6-multiplex system of communication system of the digital portable wireless in the present invention;
Fig. 7 is a view explaining of communication system of PHS telephone in the present invention;
Fig. 8 is a function block diagram of prior apparatus informing message received; and
Fig. 9 is a function block diagram of prior apparatus informing message received.

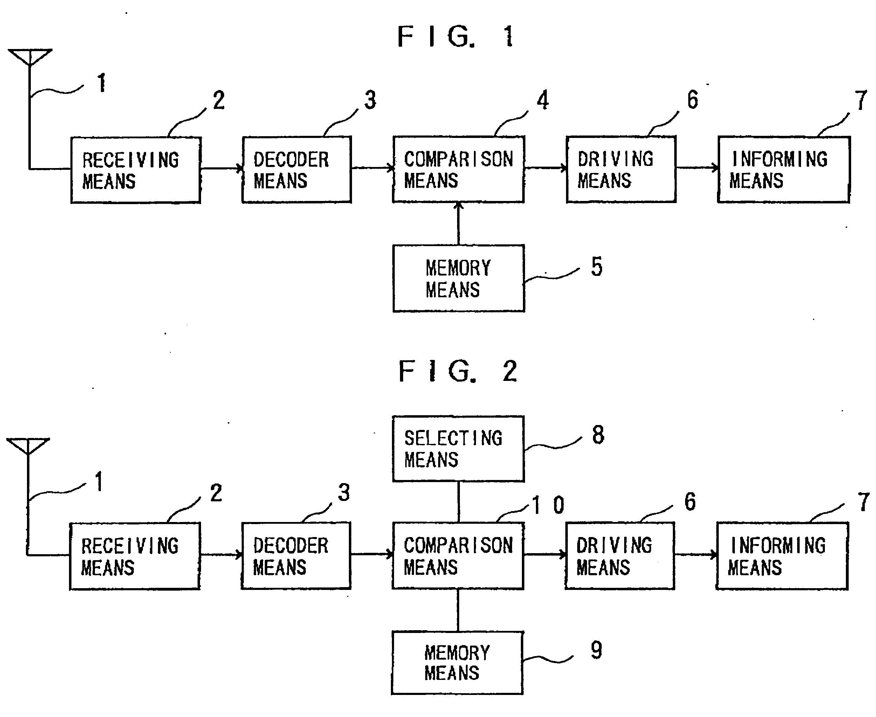

Referring to embodiment of the present invention in accordance with figures. Fig. 1 is a function block diagram of an apparatus informing message received of the present invention. An antenna 1 responses to a call from a base station to a portable wireless telephone and intakes a reply signal, as an electric signal, which the portable wireless telephone outputs to the base station. A receiving means 2 converts a high frequency signal received through antenna 1 into a low frequency signal by rectifying, amplifies low frequency signal, shapes the wave of the signal. Decoder means 3 intakes the signal wave-shaped from the receiving means 2, decodes and outputs the communication system of the signal intaken. A memory means 5 memorizes a communication system data of transmitting signal of an uplink from the moving station to the base station. a Comparison means 4 intakes the output signal from the decoding means 3, compares the communication system data of transmitting signal received of the uplink in the portable wireless telephone with the communication system data memorized in the memory means, and outputs the result compared. A driving means 6 outputs driving signal when the results compared in the comparison means 4 coincide. An informing means 7 informs in accordance with the driving signal from the driving means 6.

Fig. 2 is a function block diagram of an apparatus informing message received having a selecting means of the present invention. An antenna 1 responds to a call from a base station to a portable wireless telephone and intakes a reply signal, as an electric signal, which the portable wireless telephone outputs to the base station. A receiving means 2 converts a high frequency signal received through antenna 1 into a low frequency signal by rectifying, amplifies the low frequency signal, and shapes the wave of the signal.

Decoding means 3 intakes the signal wave-shaped from the receiving means 2 and outputs time data like period and "Hi"/"Lo" level, namely time data like one frame length and one slot length as a communication system data when signal intaken has length of "Hi" level signal and length of "Lo" level signal having determined period.

A memory means 9 memorizes time data like one frame length and one slot length of a transmitting signal of an uplink from a moving station to a base station in one or plural, different in communication system, portable wireless telephone(s) as a communication data.

A selecting means 8 selects one or plural communication system data from among one or plural communication system data memorized in the memory means 9. A comparison means 10 compares time data like one frame length and one slot length of the transmitting signal, which received from the decoding means 3, of the uplink in the portable wireless telephone with time data like one frame length and one slot length of transmitting signal which is a communication system data selected by the selected means 8 and outputs the result compared. A driving means 6 outputs a driving signal when the results compared at the comparison means 10 coincide. An informing means 7 informs in accordance with the drive signal from the driving means 6.

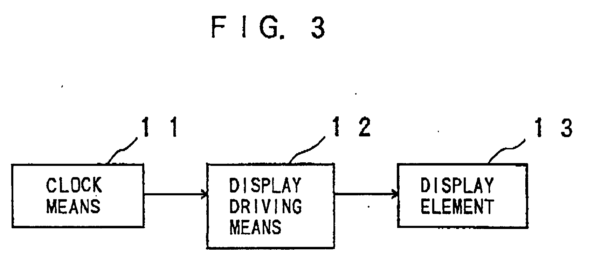

Fig. 3 is a function block diagram to display time in the present invention.

A clock means 11 counts time and outputs time data. A display driving means 12 intakes time data from the clock means 11 and drives a display element 13 independently of the time data.

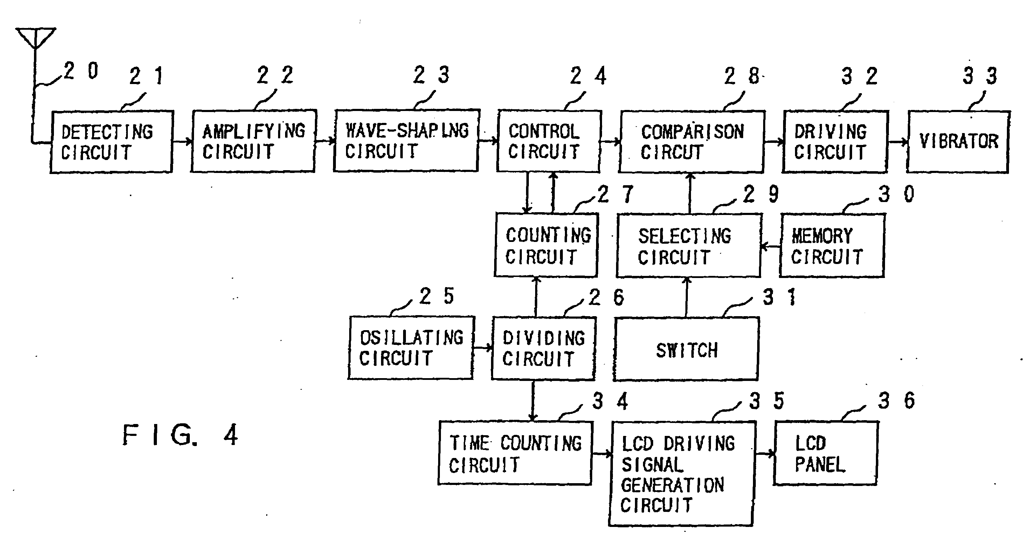

Fig. 4 is a block diagram showing a detail construction of embodiment of the present invention and has a construction which adds the construction of Fig. 3 to that of Fig. 2.

A portable wireless telephone intakes, as an electric signal, a reply signal outputting to a base station responding to a call from the base station to the portable wireless telephone from an antenna 20. A detecting circuit 21 intakes a high frequency signal the antenna 20, rectifies, and converts into a low frequency signal. An amplifying circuit 22 intakes the low frequency signal from the detecting circuit 21 and amplifies in the low frequency. A wave-shaping circuit 23 intakes the low frequency signal amplified at the amplifying circuit 22 and converts into a digital signal. A control circuit 24 intakes the digital signal from the wave-shaping circuit 23 and outputs a control signal like start, stop, and reset of count to a counting circuit 27.

The control circuit 24 intakes the result counted at the counting circuit 27 and outputs time data like period and "Hi"/"Lo" level, namely time data like one frame length and one slot length as a communication system data when signal intaken has length of "Hi" level signal and length of "Lo" level signal having determined period. A dividing circuit 26 intakes an output signal of a generating circuit 25, divides to fixed frequency, and outputs a clock signal divided. The counting circuit 27 intakes the clock signal from the dividing circuit 26, carries out start, stop of count and reset of the counting circuit, and outputs the result counted. A memory circuit 30 memorizes time data like one frame length and one slot length of transmitting signal which is a communication system data of an uplink from the moving station to the base station.

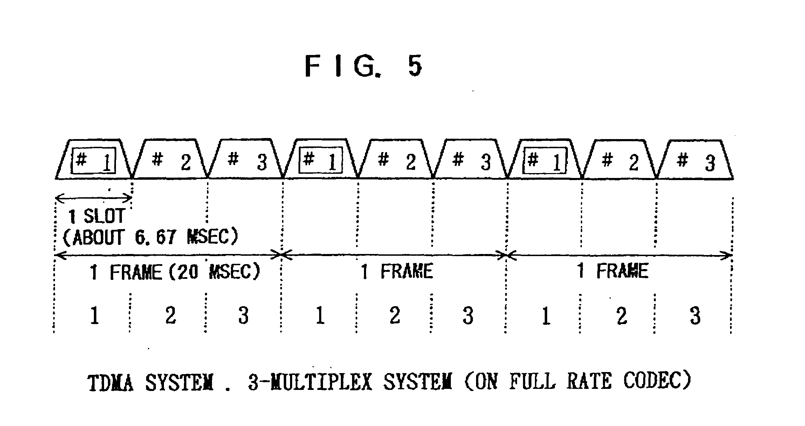

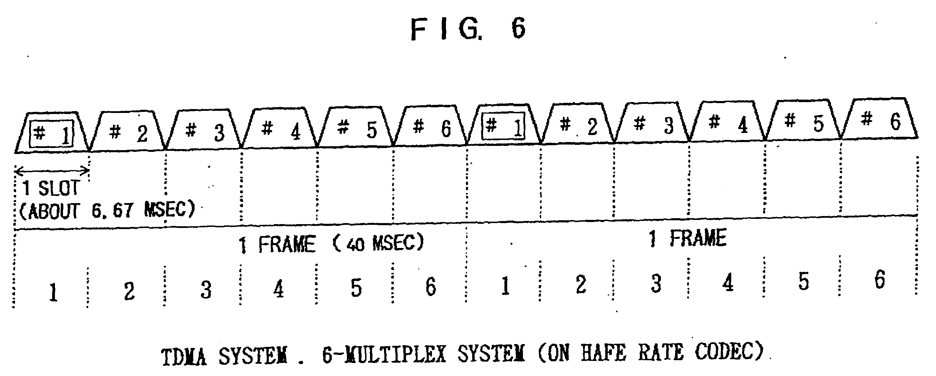

For example, communication systems of the uplink (from the moving station to the base station) of digital portable telephones are showed in Fig. 5 and Fig. 6.

The communication system is named TDMA (Time Division Multiplex Access) system which has 3-mulutiplex (full rate codec) system shown in Fig. 5 and 6-multiplex (half rate codec) system shown in Fig. 6, and the 3-multiplex system is used now. One frame of 3-multiplex system has three slots, and one frame length is 20 msec and one slot length is about 6.67 msec.

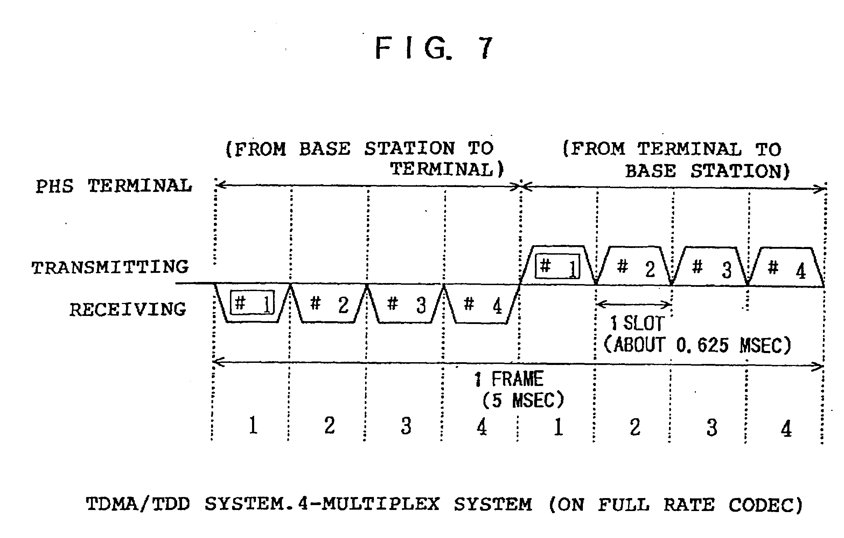

The communication system of PHS (Personal Handy phone System) is shown in Fig. 7. The communication system is named TDMA-/TDD (Time Division Duplex) system, and 4-multiplex (full rate codec) system is used. One frame of 4-multiplex system has 8 slots, and the 8 slots are divided between 4 slots for the downlink (from the base station to the terminal) and 4 slots for the uplink (from the terminal to the base station). One frame length is 5 msec and one slot length is about 0.625 msec. Here, #1 (time slot 1) shows a control channel and #2, #3 and #4 show communication channels respectively.

The memory circuit 30 memorizes time data like one slot length and one frame length as communication system data such as the communication system data of the digital portable telephone (TDMA system) data shown in Fig. 5 and Fig. 6 or the communication system data of PBS (TDMA/TDD system) data shown in Fig. 7.

A selecting circuit 29 selects one or plural communication system(s) from among the communication system data memorized in the memory circuit 30 by a switch and outputs the communication system data selected. By the selection, the kind of portable wireless telephone used is selected.

A comparison circuit 28 intakes time data like one frame length and one slot length of a receiving signal from the control circuit 24 and communication system data selected from the memory circuit 30 by the selecting circuit 29, namely time data like one frame length and one slot length, compares them and outputs the result compared.

A driving circuit 32 outputs a driving signal to a vibrator 33 in accordance with the result compared from the compared circuit 28. The vibrator 33 informs message received of the portable wireless telephone to the carrier, vibrating continuously or intermittently in accordance with the driving signal.

A time counting circuit 34 intakes the clock signal from the dividing circuit 26, counts time, and outputs time data. An LCD driving signal generation circuit 35 intakes time data from the time counting circuit 34 and outputs the LCD driving signal in accordance with the time data. An LCD panel 36 intakes the LCD driving signal from the LCD driving signal generating circuit 35 and displays time.

Although the embodiments are described about operation of the digital portable telephone and PHS telephone, the embodiments are available for other portable wireless telephones. By selecting these communication systems, one apparatus informing message received can be used for plural kinds of portable wireless telephones. Informing elements like not only the vibrator but also an LED and a buzzer can be used respectively or together.

As described above, the apparatus informing message received for portable wireless telephone of the present invention intakes, from the antenna as an electric signal, reply signal which the portable wireless telephone outputs to the base station in accordance with the call from the base station to the portable wireless telephone, rectifies by the detecting circuit, and converts into the low frequency signal. The above-mentioned construction makes the price low and makes probability of miss information by the portable wireless telephone with other communication systems, noise, and electric wave which other transmitter near in transmitting frequency band generates a little because of no need of complex hi frequency receiving circuit and because of the construction detecting only communication system.

The present invention can be realized with simple construction and can be small-sized because it is no need to form specially the apparatus detecting and transmitting the message received at the side of the portable wireless telephone.

Moreover, users can select kinds of the portable wireless telephones to use at the side of the apparatus informing message received. Therefore, the present invention can provide a low priced, reliable apparatus informing message received for portable wireless telephone as portable wireless telephones can be used regardless of their kinds.

The aforegoing description has been given by way of example only and it will be appreciated by a person skilled in the art that modifications can be made without departing from the scope of the present invention.

## Claims

1. An apparatus informing message received for portable wireless telephone comprising:
receiving means receiving reply signal which a portable wireless telephone outputs to a base station responding a call from the base station to the portable wireless telephone;
memory means storing determined communication system data;
decoder means intaking output signal from said receiving means and decoding the communication system of the portable wireless telephone;
comparison means intaking the output signal from said decoder means, comparing decoded communication system data with said communication system data stored in said memory means, and outputting the compared result to a driving means;
the driving means intaking the compared result from said comparison means and outputting a driving signal; and informing means intaking the driving signal from said driving means and informing.

2. An apparatus informing message received for portable wireless telephone comprising:
receiving means receiving reply signal which a portable wireless telephone outputs to a base station responding a call from the base station to the portable wireless telephone;
decoder means intaking output signal from said receiving means, clocking one frame length and one slot length of transmitting signal through an uplink from a moving station to the base station, and outputting as communication system data;
memory means memorizing tine data like one frame length and one slot length of transmitting signal through the uplink from the moving station to the base station as communication system data;
selecting means selecting one or plural of communication system data from among determined communication system data memorized in said memory means;
comparison means intaking the output signal from said decoder means, comparing the time data like one frame length and one slot length of transmitting signal of the uplink with the time data like one frame length and one slot length of transmitting signal memorized in said memory means as the communication system data, and outputting the compared result to a driving means;
the driving means intaking the compared result from said comparison means and outputting a driving signal; and informing means intaking the driving signal from said driving means and informing.

3. An apparatus informing message received for portable wireless telephone according to Claim 1: wherein the apparatus has time display function and has comprises of;
clock means to clock time,
display element driving means intaking time data from said clock means and outputting a display element driving signal, and
a display element displaying by the display element driving signal from said display element driving means.

4. An apparatus informing message received for portable wireless telephone according to Claim 2: wherein the apparatus has time display function and comprises of;
clock means to clock time,
display element driving means intaking time data from said clock means and outputting a display element driving signal, and
a display element displaying by the display element driving signal from said display element driving means.
